# EUROPEAN PATENT SPECIFICATION

(11) **EP 1 618 635 B1**
(45) Date of publication and mention of the grant of the patent: **03.10.2007**
(21) Application number: 04730285.6
(22) Date of filing: 29.04.2004
(51) Int. Cl.: H01S 3/23, B23K 26/06

(54) **LASER APPARATUS FOR MATERIAL PROCESSING**
LASERVORRICHTUNG ZUR MATERIALBEARBEITUNG
APPAREIL A LASER POUR TRAITEMENT DE MATERIAUX

(30) Priority: 29.04.2003 GB 0309674
(43) Date of publication of application: 25.01.2006
(73) Proprietor: SPI Lasers UK Limited, 3 Wellington Park Tollbar Way Hedge End Southampton SO30 2QU (GB)
(72) Inventor: Woods, Stuart, Wayne, Hampshire SO20 6QB (GB); Parker, David, Gareth, Hampshire SO21 1BQ (GB); Appleyard, Andrew, Paul, Hampshire SO16 3JB (GB); Varnham, Malcolm, Paul, Hampshire SO24 9HF (GB)
(74) Representative: Jones, Graham Henry
(86) International application number: PCT/GB2004/001865
(87) International publication number: WO 2004/098003

(56) References cited:
- EP-A- 1 241 745
- US-A- 4 152 575
- US-A1- 2002 167 581
- US-B1- 6 281 471
- US-B1- 6 433 306

## Description

### Field of Invention

This invention relates to apparatus for material processing. The apparatus can take various forms, for example laser welding apparatus for welding sheet metal parts of an automobile, an aeroplane, a helicopter or a space vehicle, and laser apparatus for cutting and machining.

### Background to the Invention

Lasers are used extensively in material processing applications such as welding, cutting and marking. Traditional lasers include carbon dioxide lasers and yttrium aluminium garnet (YAG) lasers. Carbon dioxide and lamp pumped YAG lasers typically consume large amounts of electrical power and typically need separate, expensive refrigerated chillers or water cooling units and corresponding cooler controller and power supplies to maintain the cooling. All this equipment is expensive to run and takes up large floor areas.

For this reason, there has been a trend over the last decade to introduce laser diode pumped lasers, which offer significant advantages in terms of power consumption, and reliability. Examples of these laser diode pumped lasers include laser diode pumped YAG lasers and laser diode pumped Vanadate lasers. These diode pumped solid-state lasers consume significantly less power than their lamp-pumped equivalents, can be operated without external chillers, and have significantly improved reliability.

A limitation of the diode pumped solid state lasers is that it is difficult to achieve the long-pulse operation required in applications such as welding thin sheet metal. For such applications, lamp pumped lasers are still the laser of choice, despite the significant drawbacks of high-maintenance because the lamps have to be replaced on a regular basis, high infrastructure costs because of electrical power and external chiller units, and large floor area siting requirements.

A high power fibre amplifier system is described in United States patent no 6,433,306 for material processing. The system is driven with a time varying drive signal from a modulated semiconductor laser signal source to produce an optical output having varying pulse shapes or pulse widths. Another technique to produce varying pulse shapes is described in European patent application EP 1,241,745 in which light from a laser source is divided into a plurality of optical fibres having different lengths, and then combined to provide the desired pulse shape.

There is a need for apparatus for material processing, for example laser welding, cutting and micromachining, that is less expensive, that consumes less power, that does not have high-maintenance costs, and yet can provide the relatively long pulses required for applications such as welding, cutting and machining.

It is an aim of the present invention to provide apparatus for material processing that reduces the above mentioned problems.

### Summary of the Invention

Accordingly, the present invention provides apparatus for material processing, which apparatus comprises a rare-earth doped fibre, a laser diode source, a stored energy short pulse laser and a controller, wherein the rare-earth doped fibre is pumped by the laser diode source to provide optical radiation, the optical radiation emitted by the rare-earth doped fibre is combined with optical radiation emitted by the short pulse laser, and the controller synchronizes the optical radiation emitted from the rare-earth doped fibre with the optical radiation emitted by the short pulse laser to provide a plurality of pulses comprising a pre-pulse and a main pulse, the average peak power of the pre-pulse being greater than the peak power of the main pulse, the apparatus being characterised in that the rare-earth doped fibre and the laser diode source are in the form of a cladding pumped fibre laser, and the pre-pulse has an energy provided by the stored energy short pulse laser, and the main pulse has an energy provided by the cladding pumped fibre laser.

The apparatus of the invention allows the use of short pulse lasers that utilize stored energy to output pulses having peak powers significantly higher than the power supplied by the laser diode source. The apparatus thus provides savings in equipment costs (dominated by the price of laser diodes), as well as reduced infrastructure and utility costs.

The short pulse laser may be a Q-switched laser. The Q-switched laser may be an optical fibre Q-switched laser. The short pulse laser may be a master oscillator power amplifier.

The optical radiation from the rare earth doped fibre and the optical radiation from the short-pulse laser may be combined in parallel. Alternatively, the optical radiation from the rare earth doped fibre and the optical radiation from the short-pulse laser may be combined in series.

The apparatus may be configured to emit pulse energies between 0.01mJ and 10J. The pulses may have lengths between 1µs and 10,000µs. The pulse repetition frequency may be between 1Hz and 10kHz. The apparatus may be configured to emit pulses having pulse energies between 0.01mJ and 1mJ. The pulses may have lengths between 10ns and 10µs. The pulse repetition frequency may be between 10kHz and 500kHz.

The main pulse may have a substantially uniform peak power. The shape of a falling edge of the main pulse may be different from the shape of a rising edge of the pre-pulse.

The apparatus may include a modulator for modulating me laser diode source. The modulator may comprise a switch. The switch may divert at least 10A of electrical current into the laser diode source. The electrical current may be switched in a time period less than 500ns. The electrical current may be switched in a time period less than 250ns. The electrical current may be switched in a time period less than 100ns.

The laser diode source may be located remotely from the rare-earth doped fibre.

The laser diode source may comprise an array of single emitters, a semiconductor laser bar, a semiconductor laser stack or an array of vertical cavity surface emitting lasers.

The apparatus may be in the form of laser apparatus for welding sheet metal. The apparatus may alternatively be in the form of laser welding apparatus for welding sheet metal parts of an automobile, an aeroplane, a helicopter, or a space vehicle. The apparatus may alternatively be in the form of laser apparatus for cutting and machining.

### Brief Description of the Drawings

Embodiments of the invention will now be described solely by way of example and with reference to the accompanying drawings in which:
Figure 1 shows apparatus for material processing;
Figure 2 shows a pulse comprising a pre-pulse;
Figure 3 shows a switch;
Figure 4 shows a Q-switched laser and a cladding pumped fibre laser combined in parallel;
Figure 5 shows a Q-switched laser and a cladding pumped fibre laser combined in series; and
Figure 6 shows a master oscillator power amplifier.

### Detailed Description of Preferred Embodiments of the Invention

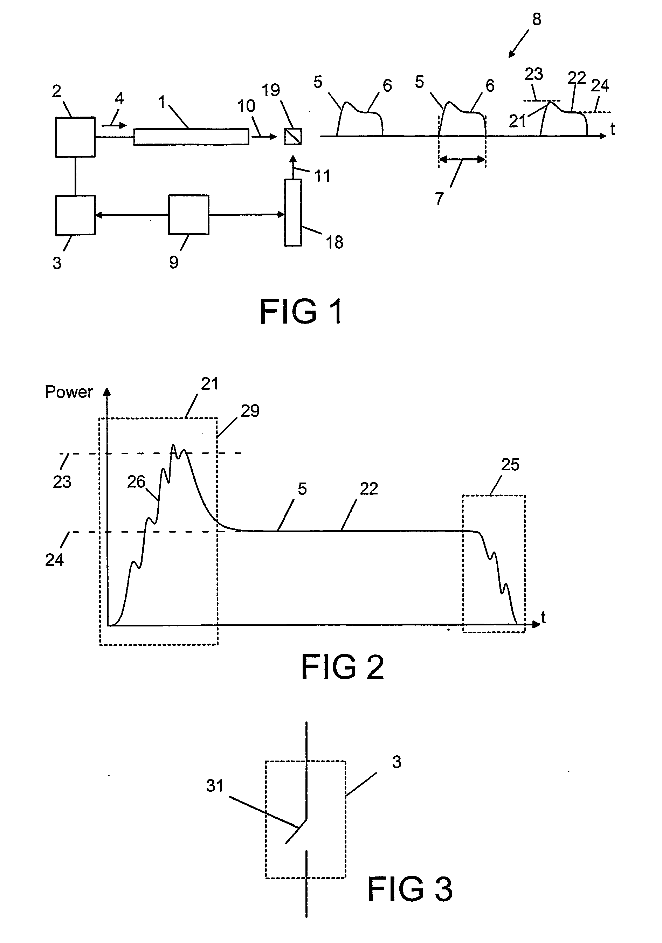

Referring to Figure 1, there is shown apparatus for material processing comprising a rare-earth doped fibre 1, a laser diode source 2, a short pulse laser 18 and a controller 9, wherein the rare-earth doped fibre 1 is pumped by the laser diode source 2 to provide optical radiation 10, and the optical radiation 10 emitted by the rare-earth doped fibre 1 is combined with optical radiation 11 emitted by the short pulse laser 18, the apparatus being characterised in that the controller 9 synchronizes the optical radiation 10 emitted from the rare-earth doped fibre 1 with the optical radiation 11 emitted by the short pulse laser 18 to provide a plurality of pulses 5 comprising a pre-pulse 21 and a main pulse 22, the average peak power 23 of the pre-pulse 21 being greater than the peak power 24 of the main pulse 22.

The optical radiation 10 and the optical radiation 11 are shown as being combined by a coupler 19. The coupler 19 may be a dichroic mirror, a mirror, a half-silvered mirror, a beam combiner, a polarisation beam combiner, or an optical waveguide coupler.

Also shown in Figure 1 is a modulator 3 for modulating the optical radiation 10 emitted by the rare-earth doped fibre 1. The modulator 3 may be a modulator that modulates the output of the laser diode source 2. Modulation can be achieved by direct current modulation of the laser diode source or by placing an optical modulator between the laser diode source 2 and the rare-earth doped fibre 1. The controller 9 is shown as providing control inputs to the modulator 3 and to the short pulse laser 18. The control function provided by the controller 9 may be derived from externally provided signals or by the provision of feedback - for example as derived from process monitoring equipment such as cameras, thermal detectors, chemical sensors or optical detectors. The controller 9 may be an electronic controller which may include one or more computers or microprocessors.

The pulses 5 can have pulse energies 6 from 0.01mJ to 10J, pulse lengths 7 between 1ns and 10,000µs, and a pulse repetition frequency 8 between 1Hz and 500kHz.

Figure 2 shows a pulse 5 that comprises a pre-pulse 21 and a main pulse 22, wherein the average peak power 23 of the pre-pulse 21 is greater than the peak power 24 of the main pulse 22. The pre-pulse 21 has an energy 29. The main pulse 22 preferably has a substantially uniform peak power 24. The shape of the falling edge 25 of the main pulse 22 can be the same or be different from the shape of the rising edge 26 of the pre-pulse 21. In many material processing applications such as welding thin sheets of metal, the shape of the falling edge 25 is made to be deliberately different from the shape of the rising edge 26. In many material processing applications, the pre-pulse 21 is required to have a higher average peak power 23 with sufficient energy 29 in order to initiate a process (such as the initiation of a weld in welding applications). The process is then continued with the main pulse 22, and brought to a halt with the falling edge 25 of the main pulse 22. The pre-pulse 21 can be 20ns to 1µs long. The average peak power 23 of the pre-pulse 21 can be 100W to 100,000W. The peak power 24 of the main pulse 22 can be 50W to 10,000W.

Figure 3 shows a modulator 3 that comprises a switch 31. The choice of switch 31 is important for material processing applications since it is often necessary to divert between 1A and 100A of electrical current into the laser diode source within relatively short timescales, such as between 50ns and 500ns. A suitable switch 31 is a PCO-6140 pulsed/CW laser diode driver module from Directed Energy Incorporated which can deliver 60A with a rise time (10% to 90%) adjustable from less than 50ns to greater than 40µs.

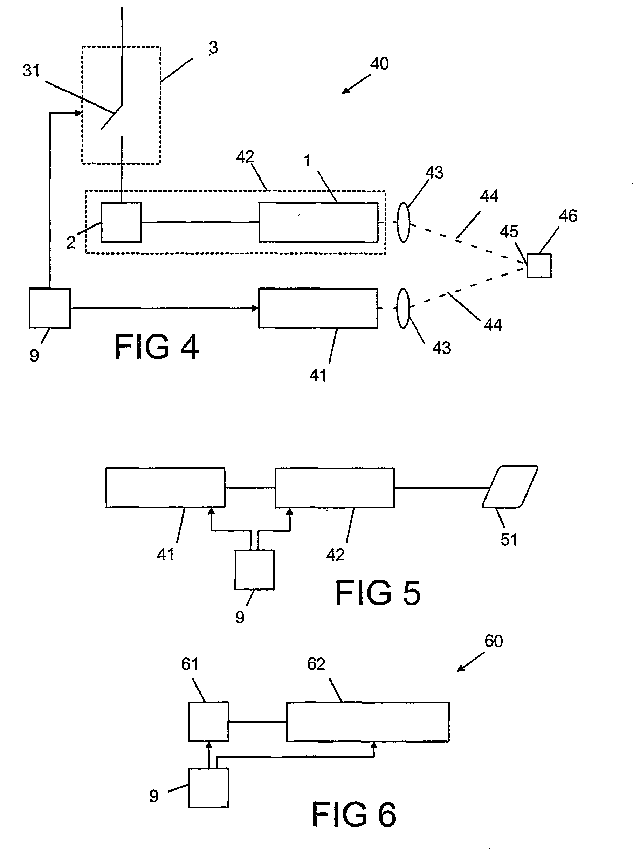

Figure 4 shows a fibre laser system 40 that comprises a Q-switched laser 41 and a cladding pumped fibre laser 42. The Q-switched laser 41 can be a solid state Q-switched laser or a Q-switched fibre laser. The cladding pumped fibre laser 42 comprises the rare earth doped fibre 1 and the laser diode source 2. The outputs of the Q-switched laser 41 and the cladding pumped fibre laser 42 are shown combined in parallel using lenses 43 such that their laser outputs 44 combine together at a location 45 such as the surface of a material 46. Alternatively, the Q-switched laser 41 and the cladding pumped fibre laser 42 can be combined via a dichroic filter. The Q-switched laser 41 provides much of the energy in the pre-pulse 21 and the cladding pumped fibre laser 42 provides the energy in the main pulse 22. The cladding pumped fibre laser 42 can advantageously utilize the switch 31 in order to switch on the laser diode source 2.

Figure 5 shows the outputs of the Q-switched laser 41 and the cladding pumped fibre laser 42 combined in series. It is advantageous when combining the outputs in series for the Q-switched laser 41 and the cladding pumped fibre laser 42 to have different lasing wavelengths, such wavelengths being determined for example by dichroic mirrors or gratings. Also shown in Figure 5 is sheet metal 51 such as found in the manufacture of an automobile, an aeroplane, a helicopter, or a space vehicle.

Referring to Figures 4 and 5, the combination of the Q-switched laser 41 and the cladding pumped laser 42 combines the energy storage advantages of the Q-switched laser 41 with the high-power advantages of the cladding pumped fibre laser 42. An alternative configuration based only on cladding pumped fibre lasers 42 may suffer a disadvantage in having to utilize many more pump diodes in order to achieve the higher peak power pre-pulse 21. The Q-switched laser 41 can be replaced by a master oscillator power amplifier or other optical sources capable of storing energy supplied by pumps and releasing the stored energy in a pulse having a higher peak power than the power supplied by the pumps as well as sufficient energy within the pulse to initiate the material process.

An advantage of the arrangements shown in Figures 4 and 5 is that it can be more economic to combine a stored energy source and a cladding pumped fibre laser to provide the pulse shape of Figure 2. This is because the high peak power and high energy content of the pre-pulse 21 can be obtained with a source comprising lower power pumps than would be required if the pre-pulse 21 were obtained from a cladding pumped laser alone. For example, if the average peak power 23 were 10kW and the peak power 24 of the main pulse were 1kW, then single cladding pumped fibre laser solution would require approximately 20kW of pump power (assuming 50% optical to optical efficiency). The embodiments shown in Figures 4 and 5 would be achievable with a stored energy source (to provide the 10kW average peak power 23) comprising 1 W to 200W of pump power (assuming a relatively low repetition rate such as 0.1Hz to 1000Hz), and a cladding pumped fibre laser comprising 2kW of pump power (assuming 50% optical efficiency). The advantages become even more pronounced with 5kW or 10kW fibre lasers used in processes such as welding that require a high-energy, high power pre-pulse 21. Fibre lasers 42 having various output powers are commercially available from companies such as JDS Uniphase and Southampton Photonics, Inc.

A further advantage of the arrangements shown in Figures 4 and 5 is that the pre-pulse 21 can be controlled independently of the main pulse 22. This facilitates optimisation of process parameters and introduction of the process into manufacturing. Thus the average peak power 23 and energy 29 of the pre-pulse 21 can be tailored for process initiation of different materials by optimising the Q-switched laser 41 independently of the cladding pumped fibre laser 42. The Q-switched laser 41 can be optimised by varying the pump power, intra-cavity losses and wavelength. Additionally, Q-switched lasers 41 having different cavity lengths can also be used. Alternative to the invention, even more flexibility is achievable with a master oscillator power amplifier to replace the Q-switched laser 41, particularly if the master oscillator power amplifier is seeded with an electrically-modulated semiconductor diode laser. Thus the embodiments provide much greater flexibility than is achievable from use of relaxation oscillations on a pump-modulated fibre laser.

Figure 6 shows apparatus comprising a master oscillator power amplifier 60 which does not fall within the scope of the claims. The master oscillator power amplifier 60 has an oscillator 61 and a power amplifier 62. The power amplifier 62 comprises the rare-earth doped fibre 1 and the laser diode source 2. The oscillator 61 can be a Q-switched laser, and the power amplifier 62 can comprise at least one fibre amplifier which may include at least one of pre-amplifiers, core-pumped fibre amplifiers, and cladding-pumped fibre amplifiers which can be single mode or multimode. The oscillator 61 can be a semiconductor laser diode (such as a distributed feedback semiconductor laser) or a fibre laser. Examples of fibre amplifiers that may be used are disclosed in United States Patent No. 6288835.

The master oscillator power amplifier 60 can be used to replace the Q-switched laser 41 in Figures 4 and 5. Alternatively, the master oscillator power amplifier 60 can be used to generate the entire pulse 5 shown in Figure 2 which is advantageous for either high-repetition rate systems (10kHz to 250kHz) operating with narrower pulses (1ns to 1 µs), or with lower average peak power 23 systems where the economic justification for using a Q-switched laser 41 with a cladding pumped fibre laser 42 does not apply.

Advantageously, the controller 9 is arranged to control the average peak power 23, energy 29 and shape of the pre-pulse 21, the power 24 of the main pulse 22, and the shape of the falling edge 25. This enables the laser pulses 5 emitted by the master oscillator power amplifier 60 to be shaped with relatively precise profiles.

The arrangements shown in Figures 4, 5 and 6 are particularly useful for laser welding apparatus for welding sheet metal parts of an automobile, an aeroplane, a helicopter, or a space vehicle, and laser apparatus for cutting and machining. By cutting, it is meant both pulse ablation as well as fine cutting achieved via melting (as opposed to shorter pulse ablation cutting). The apparatus of the invention has particular relevance for welding sheet metal having a thickness of 0.75mm to 1.5mm, as well as welding, cutting and machining fine mechanical parts such as watches, jewellery, electronics, and medical components (implants, pacemakers, stents etc) where the metal thickness can be less than 0.3mm, and often less than 0.1mm.

Referring back to Figure 1, the laser diode source 2 may be located remotely from the fibre laser system 1. This has advantages in industrial welding facilities because the fibre laser system 1 can be placed near the welding tools, whereas the pump diodes can be placed near service corridors to facilitate maintenance.

The laser diode source 2 can comprise an array of single emitters, a semiconductor laser bar, a semiconductor laser stack or an array of vertical cavity surface emitting lasers. The apparatus may comprise a plurality of laser diode sources 2 and modulators 3 in order to achieve the high powers from the cladding pumped fibre lasers 42.

It is to be appreciated that the embodiments of the invention described above with reference to the accompanying drawings have been given by way of example only and that modifications and additional components may be provided to enhance performance. Thus, for example, the apparatus of the invention may be laser welding apparatus for welding sheet metal parts of an automobile, an aeroplane, a helicopter or a space vehicle, or laser apparatus for cutting and machining.

## Claims

1. Apparatus for material processing, which apparatus comprises a rare-earth doped fibre (1), a laser diode source (2), a stored energy short pulse laser (18) and a controller (9), wherein the rare-earth doped fibre (1) is pumped by the laser diode source (2) to provide optical radiation (10), the optical radiation (10) emitted by the rare-earth doped fibre (1) is combined with optical radiation (11) emitted by the short pulse laser (18), and the controller (9) is adapted to synchronize the optical radiation (10) emitted from the rare-earth doped fibre (1) with the optical radiation (11) emitted by the short pulse laser (18) to provide a plurality of pulses (5) comprising a pre-pulse (21) and a main pulse (22), the average peak power (23) of the pre-pulse (21) being greater than the peak power (24) of the main pulse (22), the apparatus being **characterised in that** the rare-earth doped fibre (1) and the laser diode source (2) are in the form of a cladding pumped fibre laser, and the pre-pulse (21) has an energy provided by the stored energy short pulse laser, and the main pulse (22) has an energy provided by the cladding pumped fibre laser.

2. Apparatus according to claim 1 wherein the short pulse laser (18) is a Q-switched laser.

3. Apparatus according to claim 2 wherein the Q-switched laser is an optical fibre Q-switched laser.

4. Apparatus according to claim 1 wherein the short pulse laser (18) is a master oscillator power amplifier.

5. Apparatus according to any one of the preceding claims wherein the optical radiation (10) from the rare earth doped fibre (1) and the optical radiation (11) from the short-pulse laser (18) are combined in parallel.

6. Apparatus according to any one of claims 1 to 4 wherein the optical radiation (10) from the rare earth doped fibre (1) and the optical radiation (11) from the short-pulse laser (18) are combined in series.

7. Apparatus according to any one of the preceding claims wherein the apparatus is configured to emit pulse energies between 0.01mJ and 10J.

8. Apparatus according to claim 7 wherein the pulses have lengths between 1 µs and 10,000µs.

9. Apparatus according to claim 8 wherein the pulse repetition frequency is between 1Hz and 10kHz.

10. Apparatus according to any one of the preceding claims wherein the apparatus is configured to emit pulse energies between 0.01mJ and 1mJ.

11. Apparatus according to claim 10 wherein the pulses have lengths between 10ns and 10µs.

12. Apparatus according to claim 10 wherein the pulse repetition frequency is between 10kHz and 500kHz.

13. Apparatus according to any one of the preceding claims wherein the main pulse (22) has a substantially uniform peak power.

14. Apparatus according to anyone of the preceding claims wherein the shape of a falling edge of the main pulse (22) is different from the shape of a rising edge of the pre-pulse.

15. Apparatus according to anyone of the preceding claims wherein the apparatus includes a modulator (3) for modulating the laser diode source (2).

16. Apparatus according to claim 15, wherein the modulator (3) comprises a switch.

17. Apparatus according to claim 16 wherein the switch diverts at least 10A of electrical current into the laser diode source (2).

18. Apparatus according to claim 17 wherein the electrical current is switched in a time period less than 500ns.

19. Apparatus according to claim 18 wherein the electrical current is switched in a time period less than 250ns.

20. Apparatus according to claim 19 wherein the electrical current is switched in a time period less than 100ns.

21. Apparatus according to any one of the preceding claims wherein the laser diode source (2) is located remotely from the rare-earth doped fibre (1).

22. Apparatus according to any one of the preceding claims wherein the laser diode source (2) comprises an array of single emitters, a semiconductor laser bar, a semiconductor laser stack or an array of vertical cavity surface emitting lasers.

23. Apparatus according to any one of the preceding claims and in the form of laser apparatus for welding sheet metal.

24. Apparatus according to any one of claims 1 to 22 and in the form of laser welding apparatus for welding sheet metal parts of an automobile, an aeroplane, a helicopter, or a space vehicle.

25. Apparatus according to any one of claims 1 to 22 and in the form of laser apparatus for cutting and machining.

## Patentansprüche

1. Vorrichtung zur Materialverarbeitung, die eine seltenerddotierte Faser (1), eine Laserdiodenquelle (2), einen Kurzimpulslaser (18) mit gespeicherter Energie und ein Steuergerät (9) aufweist, wobei die seltenerddotierte Faser (1) mittels der Laserdiodenquelle (2) gepumpt wird, um optische Strahlung (10) bereitzustellen, die durch die seltenerddotierte Faser (1) emittierte optische Strahlung (10) mit durch den Kurzimpulslaser (18) emittierter optischer Strahlung (11) kombiniert wird, und das Steuergerät (9) dazu ausgelegt ist, die von der seltenerddotierten Faser (1) emittierte optische Strahlung (10) mit der durch den Kurzimpulslaser (18) emittierten optischen Strahlung (11) zu synchronisieren, um eine Vielzahl von Impulsen (5) bereitzustellen, die einen Vorimpuls (21) und einen Hauptimpuls (22) aufweisen, wobei die durchschnittliche Spitzenleistung (23) des Vorimpulses (21) größer ist als die Spitzenleistung (24) des Hauptimpulses (22), wobei die Vorrichtung **dadurch gekennzeichnet ist, dass** die seltenerddotierte Faser (1) und die Laserdiodenquelle (2) in Form eines ummantelten gepumpten Faserlasers vorliegen und der Vorimpuls (21) eine durch den Kurzimpulslaser mit gespeicherter Energie bereitgestellte Energie hat und der Hauptimpuls (22) eine durch den ummantelten gepumpten Faserlaser bereitgestellte Energie hat.

2. Vorrichtung nach Anspruch 1, wobei der Kurzimpulslaser (18) ein gütegeschalteter Laser ist.

3. Vorrichtung nach Anspruch 2, wobei der gütegeschaltete Laser ein faseroptischer gütegeschalteter Laser ist.

4. Vorrichtung nach Anspruch 1, wobei der Kurzimpulslaser (18) ein Leistungsverstärker des Steuersenders ist.

5. Vorrichtung nach einem der vorhergehenden Ansprüche, wobei die optische Strahlung (10) von der seltenerddotierten Faser (1) und die optische Strahlung (11) von dem Kurzimpulslaser (18) parallel kombiniert sind.

6. Vorrichtung nach einem der Ansprüche 1 bis 4, wobei die optische Strahlung (10) von der seltenerddotierten Faser (1) und die optische Strahlung (11) von dem Kurzimpulslaser (18) in Reihe kombiniert sind.

7. Vorrichtung nach einem der vorhergehenden Ansprüche, wobei die Vorrichtung so gestaltet ist, dass sie Impulsenergien zwischen 0,01 mJ und 10 J emittiert.

8. Vorrichtung nach Anspruch 7, wobei die Impulse eine Impulsdauer zwischen 1 µs und 10.000 µs haben.

9. Vorrichtung nach Anspruch 8, wobei die Impulsfolgefrequenz zwischen 1 Hz und 10 kHz beträgt.

10. Vorrichtung nach einem der vorhergehenden Ansprüche, wobei die Vorrichtung so gestaltet ist, dass sie Impulsenergien zwischen 0,01 mJ und 1 mJ emittiert.

11. Vorrichtung nach Anspruch 10, wobei die Impulse eine Impulsdauer zwischen 10 ns und 10 µs haben.

12. Vorrichtung nach Anspruch 10, wobei die Impulsfolgefrequenz zwischen 10 kHz und 500 kHz beträgt.

13. Vorrichtung nach einem der vorhergehenden Ansprüche, wobei der Hauptimpuls (22) eine im Wesentlichen gleichmäßige Spitzenleistung hat.

14. Vorrichtung nach einem der vorhergehenden Ansprüche, wobei sich die Form einer abfallenden Flanke des Hauptimpulses (22) von der Form einer ansteigenden Flanke des Vorimpulses unterscheidet.

15. Vorrichtung nach einem der vorhergehenden Ansprüche, wobei die Vorrichtung einen Modulator (3) zum Modulieren der Laserdiodenquelle (2) aufweist.

16. Vorrichtung nach Anspruch 15, wobei der Modulator (3) einen Schalter aufweist.

17. Vorrichtung nach Anspruch 16, wobei der Schalter einen elektrischen Strom von mindestens 10A in die Laserdiodenquelle (2) umlenkt.

18. Vorrichtung nach Anspruch 17, wobei der elektrische Strom in einer Zeit kleiner als 500 ns umgeschaltet wird.

19. Vorrichtung nach Anspruch 18, wobei der elektrische Strom in einer Zeit kleiner als 250 ns umgeschaltet wird.

20. Vorrichtung nach Anspruch 19, wobei der elektrische Strom in einer Zeit kleiner als 100 ns umgeschaltet wird.

21. Vorrichtung nach einem der vorhergehenden Ansprüche, wobei die Laserdiodenquelle (2) entfernt von der seltenerddotierten Faser (1) angeordnet ist.

22. Vorrichtung nach einem der vorhergehenden Ansprüche, wobei die Laserdiodenquelle (2) eine Gruppe von einzelnen Emittern, einen Halbleiterlaserbarren, einen Halbleiterlaserstapel oder eine Gruppe von VCSEL (vertical cavity surface emitting lasers)-Laserdioden aufweist.

23. Vorrichtung nach einem der vorhergehenden Ansprüche und in Form einer Laservorrichtung zum Schweißen von Blech.

24. Vorrichtung nach einem der Ansprüche 1 bis 22 und in Form einer Laserschweißvorrichtung zum Schweißen von Blechteilen eines Automobils, eines Flugzeugs, eines Helikopters oder eines Raumfahrzeugs.

25. Vorrichtung nach einem der Ansprüche 1 bis 22 und in Form einer Laservorrichtung zum Schneiden und zur spanenden Bearbeitung.

## Revendications

1. Appareil pour traitement de matériaux, lequel appareil comprend une fibre dopée aux terres rares (1), une source à diodes laser (2), un laser à impulsions brèves à énergie stockée (18) et un contrôleur (9), dans lequel ladite fibre dopée aux terres rares (1) est pompée au moyen de la source à diodes laser (2) pour fournir un rayonnement optique (10), le rayonnement optique (10) émis par la fibre dopée aux terres rares (1) est combiné avec le rayonnement optique (11) émis par le laser à impulsions brèves (18), et le contrôleur (9) est adapté pour synchroniser le rayonnement optique (10) émis par la fibre dopée aux terres rares (1) avec le rayonnement optique (11) émis par le laser à impulsions brèves (18) pour fournir une pluralité d'impulsions (5) comprenant une pré-impulsion (21) et une impulsion principale (22), la puissance de crête moyenne (23) de la pré-impulsion (21) étant supérieure à la puissance de crête (24) de l'impulsion principale (22), l'appareil étant **caractérisé en ce que** la fibre dopée aux terres rares (1) et la source à diodes laser (2) sont sous la forme d'un laser de revêtement à fibre pompée, et la pré-impulsion (21) a une énergie fournie par le laser à impulsions brèves à énergie stockée, et l'impulsion principale (22) a une énergie fournie par le laser de revêtement à fibre pompée.

2. Appareil selon la revendication 1 dans lequel le laser à impulsions brèves (18) est un laser Q commuté.

3. Appareil selon la revendication 2 dans lequel le laser Q commuté est un laser Q commuté à fibre optique.

4. Appareil selon la revendication 1 dans lequel le laser à impulsions brèves (18) est un oscillateur maître - amplificateur de puissance.

5. Appareil selon l'une quelconque des revendications précédentes dans lequel le rayonnement optique (10) de la fibre dopée aux terres rares (1) et le rayonnement optique (11) du laser à impulsions brèves (18) sont combinés en parallèle.

6. Appareil selon l'une quelconque des revendications 1 à 4 dans lequel le rayonnement optique (10) de la fibre dopée aux terres rares (1) et le rayonnement optique (11) du laser à impulsions brèves (18) sont combinés en série.

7. Appareil selon l'une quelconque des revendications précédentes dans lequel l'appareil est configuré pour émettre des énergies d'impulsion comprises entre 0,01 mJ et 10 J.

8. Appareil selon la revendication 7 dans lequel les impulsions ont des longueurs comprises entre 1 µs et 10 000 µs.

9. Appareil selon la revendication 8 dans lequel la fréquence de répétition des impulsions est comprise entre 1 Hz et 10 kHz.

10. Appareil selon l'une quelconque des revendications précédentes dans lequel l'appareil est configuré pour émettre des énergies d'impulsion comprises entre 0,01 mJ et 1 mJ.

11. Appareil selon la revendication 10 dans lequel les impulsions ont des longueurs comprises entre 10 ns et 10 µs.

12. Appareil selon la revendication 10 dans lequel la fréquence de répétition des impulsions est comprise entre 10 kHz et 500 kHz.

13. Appareil selon l'une quelconque des revendications précédentes dans lequel l'impulsion principale (22) a une puissance de crête sensiblement uniforme.

14. Appareil selon l'une quelconque des revendications précédentes dans lequel la forme d'un front descendant de l'impulsion principale (22) est différent de la forme d'un front montant de la pré-impulsion.

15. Appareil selon l'une quelconque des revendications précédentes dans lequel l'appareil comprend un modulateur (3) pour moduler la source à diodes laser (2).

16. Appareil selon la revendication 15 dans lequel le modulateur (3) comprend un commutateur.

17. Appareil selon la revendication 16 dans lequel le commutateur dévie au moins 10 A du courant électrique dans la source à diodes laser (2).

18. Appareil selon la revendication 17 dans lequel le courant électrique est commuté dans une période de temps inférieure à 500 ns.

19. Appareil selon la revendication 18 dans lequel le courant électrique est commuté dans une période de temps inférieure à 250 ns.

20. Appareil selon la revendication 19 dans lequel le courant électrique est commuté dans une période de temps inférieure à 100 ns.

21. Appareil selon l'une quelconque des revendications précédentes dans lequel la source à diodes laser (2) est située à distance de la fibre dopée aux terres rares (1).

22. Appareil selon l'une quelconque des revendications précédentes dans lequel la source à diodes laser (2) comprend un ensemble d'émetteurs individuels, une barre laser à semi-conducteur, une pile de lasers à semi-conducteur ou un ensemble de lasers à cavité verticale émettant par la surface.

23. Appareil selon l'une quelconque des revendications précédentes et sous la forme d'appareil à laser pour souder des tôles métalliques.

24. Appareil selon l'une quelconque des revendications 1 à 22 et sous la forme d'appareil de soudage à laser pour souder des parties en tôle métallique d'une automobile, d'un avion, d'un hélicoptère ou d'un véhicule spatial.

25. Appareil selon l'une quelconque des revendications 1 à 22 et sous la forme d'appareil à laser pour couper et usiner.
